Europäisches Patentamt

European Patent Office

Office européen des brevets

(19)

(11) Veröffentlichungsnummer: **0 022 940**

A2

(12) ## EUROPÄISCHE PATENTANMELDUNG

(21) Anmeldenummer: **80103593.2**

(22) Anmeldetag: **25.06.80**

(51) Int. Cl.³: **F 24 J 3/02**

(30) Priorität: **19.07.79 DE 2929162**
**28.11.79 DE 2947877**

(43) Veröffentlichungstag der Anmeldung:
**28.01.81 Patentblatt 81/4**

(84) Benannte Vertragsstaaten:
**AT BE CH GB LI LU NL**

(71) Anmelder: **Boetcher, Alfred, Prof.-Dr.**
**Hangstrasse 11**
**D-5100 Aachen(DE)**

(72) Erfinder: **Boetcher, Alfred, Prof.-Dr.**
**Hangstrasse 11**
**D-5100 Aachen(DE)**

(74) Vertreter: **Müller-Gerbes, Margot, Dipl.-Ing.**
**c/o Firma DYNAMIT NOBEL AKTIENGESELLSCHAFT**
**-Patentabteilung- Postfach 1209**
**D-5210 Troisdorf/Bez.Köln(DE)**

(54) **Solarkollektor.**

(57) Solarkollektor zur Erwärmung von Luft für einen solaren Wassererhitzer, bei dem die in dem Solarkollektor erwärmte Luft im Kreislauf durch einen Luft/Wasser-Wärmetauscher und zurück in den Solarkollektor geblasen wird, aus mindestens zwei übereinanderliegenden Kunststoffolien, wobei der luftdurchströmte Kanal ein-bzw. beidseitig thermisch isoliert ist.

EP 0 022 940 A2

./...

Croydon Printing Company Ltd.

Fig 4

- 1 -

Troisdorf, den 27. Mai 1980
OZ: 80028 (3056) MG/Ce

DYNAMIT NOBEL AKTIENGESELLSCHAFT
Troisdorf, Bez. Köln

So l arkollektor

Die Erfindung bezieht sich auf einen Solarkollektor zur Erwärmung von Luft für einen solaren Wassererhitzer, bei dem die in dem Solarkollektor erwärmte Luft im Kreislauf durch einen Luft/Wasser-Wärmetauscher und zurück in den Solarkollektor geblasen wird.

Noch immer werden für die übliche solare Wassererhitzung Flüssigkeitskollektoren verwandt, in denen entweder ein flüssiges Wärmetransportmedium über einen Wärmetauscher das Wasser erwärmt oder in seltenen Fällen auch das zu erwärmende Wasser direkt durch den Kollektor strömt.

Es ist auch schon vorgeschlagen worden, das Wasser über einen Luft-Wasser-Wärmetauscher zu erwärmen, nachdem die Luft in einem z.B. gemauerten Solarkollektor solar erwärmt wurde.

Der Erfindung liegt die Aufgabe zugrunde, für dieses neu-

- 2 -

artige Verfahren besonders geeignete und angepaßte Solarkollektoren zu schaffen. Hierzu wird erfindungsgemäß ein Solarkollektor vorgeschlagen, der aus mindestens zwei übereinanderliegenden Kunststoffolien besteht, die mindestens längs zweier Ränder miteinander verschweißt oder dicht verklebt sind und mindestens einen luftdurchströmten Kanal bilden, wobei mindestens die äußerste, der Sonneneinstrahlung direkt ausgesetzte Kunststoffolie transparent ausgebildet ist.

Für solche Solarkollektoren zur Erwärmung von Luft, die aus randverschweißten Kunststoffolien bestehen, zwischen denen die zu erwärmende Luft hindurchgeblasen wird, werden üblicherweise* schwarz gefärbte Kunststoffolien als Absorber für die Sonnenstrahlung verwendet. Diese Kunststoffolie ist auf einer Seite mit der zu erwärmenden Luft in Kontakt und gibt an sie einen Teil der absorbierten Strahlungsenergie als Wärme ab. Wegen des bei technisch machbaren Luftgeschwindigkeiten relativ schlechten Wärmeübergangs von der schwarzen Kunststoffolie an die vorbeiströmende Luft hat diese stets eine deutlich höhere Temperatur als die Luft, was zu nachteiligen Wärmeverlusten führt.

Der Wirkungsgrad solcher Solarkollektoren, in denen Luft erwärmt wird, wird in erster Linie von der thermischen Isolation des die sich erwärmende Luft führenden Kanals von der Außenluft und durch die Strömungsgeschwindigkeit der Luft bestimmt.

Zur Verbesserung des Wirkungsgrades und Beseitigung von Wärmeverlusten wird daher in weiterer Ausbildung der Erfindung vorgeschlagen, daß der Solarkollektor aus drei oder vier übereinanderliegenden Kunststoffolien gebildet ist, die mindestens längs zweier Ränder dicht miteinander verbunden sind und mindestens einmal zwei bzw. drei übereinanderliegende Kanäle bilden. Hierbei können die Kanäle auch gegeneinander versetzt angeordnet sein.

*für die Unterseite

Die für die praktische Nutzung wichtigsten Eigenschaften wie hoher Wirkungsgrad und Leerlauffestigkeit, können erfindungsgemäß in optimaler Weise von 3- und 4-lagigen Kunststoffolien-Solarkollektoren erreicht werden, bei denen die Folien übereinandergelegt und an den Rändern verschweißt oder dicht verklebt sind, und wobei die beiden oberen äußeren Kunststoffolienlagen transparent sind. Hierbei ist der luftdurchströmte Kanal erfindungsgemäß thermisch isoliert, indem die zur Außenluft angrenzenden Kanäle als geschlossene Luftkammer ausgebildet sind. Um den luftführenden Kanal thermisch zu isolieren, werden in den nach außen angrenzenden Bereichen Kammern mit stehender Luft vorgesehen, die z.B. durch ein Ventil aufgeblasen werden. Dieses System führt in der Praxis noch zu zwei wesentlichen Schwierigkeiten: Einerseits muß für verschiedene Staudrucke im luftführenden Kanal (bedingt durch verschiedene Luftdurchsätze) der Luftdruck in der isolierenden, angrenzenden Luftkammer jeweils angepaßt werden, da bei zu ungleichen Drucken in beiden Kammern diejenige mit dem niedrigeren Innendruck zu stark verengt wird. Dies erfordert, insbesondere bei häufiger wechselnden Fördermengen, sehr viel Bedienungsaufwand. Andererseits soll jeder Solarkollektor leerlauffest sein, d.h. auch bei Ausfall des Wärmetransportmediums (hier Luft) nicht durch Überhitzung beschädigt werden. Bei der relativ geringen Warmfestigkeit von Kunststoffen ist diese Forderung besonders schwer zu erfüllen. Bei Kunststoffolienkollektoren ist die Absorberfolie am stärksten gefährdet, um so mehr, je besser die Wärmeisolation ist. Ein vom Staudruck unabhängiges aufliegendes Luftpolster ist eine auch beim Ausfall des Wärmetransportmediums voll wirksame thermische Isolation, wodurch der Mehrlagen-Folienkollektor im Leerlauffall stark gefährdet ist.

Eine überraschend einfache Lösung beider Probleme wird

- 4 -

gemäß einer Weiterbildung der Erfindung dadurch erreicht, daß das wärmeisolierende Luftpolster nicht vollständig abgeschlossen und durch ein Ventil hindurch aufgeblasen wird, sondern bei dreilagigen Kollektoren in die mittlere, bei 4-lagigen in beide innenliegenden Kunststoffolien je mindestens eine Öffnung, Loch o.ä. gemacht wird. Dadurch entsteht in der isolierenden Luftkammer derselbe Luftdruck wie im luftdurchströmten Kanal an der Stelle der Öffnung. Ändert sich der Staudruck an dieser Stelle durch Änderung der Luft-Fördermenge, ändert sich auch der Druck im isolierenden Luftpolster. Bei langen Kollektoren mit über ihre Länge stark unterschiedlichem Staudruck kann entweder eine verbindende Öffnung auf halber Länge oder auch mehrere kleine Öffnungen über die ganze Länge gemacht werden. Der Anteil der durch das isolierende Luftpolster in diesem Fall strömenden Luft soll, um den Wirkungsgrad nicht zu sehr zu verschlechtern, unter 20 % liegen. Es sollte bevorzugt 80 bis 100 % der zu erwärmenden Luft durch den Kanal strömen.

Im Leerlauffall wird der Staudruck im Inneren und damit auch der Druck in der isolierenden Kammer Null, wodurch das isolierende Luftpolster verschwindet und damit die Wärmeableitung zur Außenluft entscheidend erhöht wird. Es wurde experimentell nachgewiesen, daß dadurch auch bei sehr hoher Sonneneinstrahlung die Absorberfolie nicht überhitzt wird.

Bei so angepaßten isolierenden Luftpolstern gewinnt der zweite, den Wirkungsgrad beeinflussende Faktor: die Luftgeschwindigkeit, volle Bedeutung. Um günstige Wirkungsgrade (über 50 %) zu erreichen, sind Luftgeschwindigkeiten über 6 m/sec günstig. Andererseits muß, um eine hinreichende Temperaturerhöhung der durchströmenden Luft auch bei mittleren Einstrahlungen zu erreichen, die pro Zeiteinheit

- 5 -

durchströmende Luftmenge begrenzt bleiben. Dies ist nur dadurch zu gewährleisten, daß der Querschnitt des luftführenden Raumes entsprechend klein gehalten wird. Da die Absorberfläche gleichzeitig groß bleiben soll, muß die Höhe des luftführenden Raumes klein gehalten werden.

Um dieses Ziel zu erreichen, wurden verschiedene Maßnahmen gefunden: Um das Aufblasen des Kollektors zu näherungsweise kreisförmigem Querschnitt zu vermeiden, müssen die verschweißten Längskanten in hinreichendem Abstand voneinander gehalten werden. Dazu werden in den verschweißten Längskanten Ösen aus Kunststoff oder Metall eingebracht und mit ihrer Hilfe der Kollektor auf der Unterlage so fixiert, daß er sich auch bei höherem Innendruck nicht mehr zu stark aufwölben kann.

Eine sehr nützliche weitere Einengung der Aufwölbung des Kollektors ist dadurch möglich, daß seine Aufwölbung nach oben mechanisch begrenzt wird, z.B. durch übergelegten Maschendraht oder darüber gespannte Drähte. Hierdurch wird zugleich ein zu starkes Flattern des Solarkollektors bei stärkerem Wind verhindert.

Ferner muß bei solchen an Kunststoffolien gebildeten Solarkollektoren der luftdurchströmte Querschnitt möglichst flach gehalten werden, um einen hinreichenden Wärmeübergang Folie/Luft zu erzielen. Dies wird z.B. durch Spannen des Solarkollektors auf der Unterlage näherungsweise erreicht, – ein rechteckiger Querschnitt, wie er optimal wäre, kann jedoch so nicht erreicht werden.

Diesem Nachteil kann erfindungsgemäß dadurch begegnet werden, daß der luftführende Kanal dadurch bestimmt wird, daß in den luftführenden Kanal starre Abstandshalter für die beiden Längskanten eingeschoben werden. Sie ermög-

- 6 -

lichen eine Anpassung des Querschnittes bei konstanter Breite der Kollektor-Schläuche an die zu fördernden Luftmengen. Untersuchungen haben gezeigt, daß das Verhältnis der mittleren Höhe zur Breite des luftführenden Kanals zur Erzielung günstiger Wirkungsgrade nicht größer als 0,15 sein sollte.

Eine besonders leerlauffeste Ausführung mit gleichzeitig hohem Wirkungsgrad ist erfindungsgemäß dadurch möglich, daß in dem luftdurchströmten Kanal ein metallischer Absorber so eingeschoben ist, daß die zu erwärmende Luft sowohl an seiner Ober- als auch Unterseite vorbeiströmt. Der Absorber reicht hierbei über die ganze Breite des Kanals.

Zur Verbesserung des Wärmeübergangs vom Absorber zur Luft kann dessen Oberfläche durch Aufrauhen oder mechanische Prägung vergrößert werden, d.h. durch geometrische Makro- bzw. Mikrounebenheiten in der Absorberoberfläche.

Die zu erwärmende Luft strömt sowohl oberhalb wie auch unterhalb des Absorbers, wodurch die Wärmeübergangsfläche gegenüber Solarkollektoren ohne eingeschobenen Absorber verdoppelt wird. Gleichzeitig werden die Wärmeverluste dadurch verringert, daß der heiße Absorber nur noch sehr kleine Berührungsflächen mit der Unterlage hat. Hierdurch sind sehr hohe Wirkungsgrade möglich.

Der Absorber ist in weiterer Ausgestaltung der Erfindung auf seiner Oberseite zur Erzielung hoher Absorptionswerte geschwärzt, auf der Unterseite dagegen metallisch blank, um eine geringe Abstrahlung im langwelligen Infrarot zu haben.

Die erfindungsgemäß in dem Solarkollektor eingeschobenen metallischen Absorber können zugleich als mechanische Abstandshalter für die Längskanten der Kanäle des Solarkollektors dienen.

Beispielsweise können Absorberbleche, die über die ganze Breite des Kanals reichen, in diesen eingeschoben werden. Diese können an ihren Längsseiten so umgebogen werden, daß die darüber- und darunterliegenden beiden Kunststoffolien etwa gleichen Abstand vom Absorberblech haben.

Der Absorber kann auch beidseitig in Profilleisten geführt werden, die der besseren Wärmeisolation wegen aus Kunststoff bestehen können. An beiden Seiten und/oder in der Mitte kann der Absorber so gebogen werden, daß seine Breite durch elastische Verformung um einige Millimeter verringert werden kann. Hierdurch ist ein strafferes Einpassen in den Kanal des Solarkollektors möglich. Eine Mittelfalte des Absorbers dient bei breiten Kollektoren zugleich zur Mittelunterstützung des Absorbers und der angrenzenden Kunststoffolien.

Um bei ungleichmäßiger Luftverteilung am Eingang des Solarkollektors auf den oberen und unteren Teilkanal unterschiedliche Drucke oben und unten zu vermeiden, können in den Absorber Öffnungen gestanzt oder gebohrt werden, durch die hindurch ein Druckausgleich erfolgt. Um die Absorber in die fertig konfektionierten und am Einsatzort ausgelegten Solarkollektoren aus Kunststoffolien einschieben zu können, bleibt bei diesen der luftführende Kanal auf einer Schmalseite über die ganze Breite offen. Nach Einschieben der Absorber wird die Öffnung verschweißt, verklebt oder mechanisch dicht verschlossen, beispielsweise durch Verwendung eines Reißverschlusses.

In der Zeichnung ist die Erfindung beispielhaft erläutert. Es zeigen:

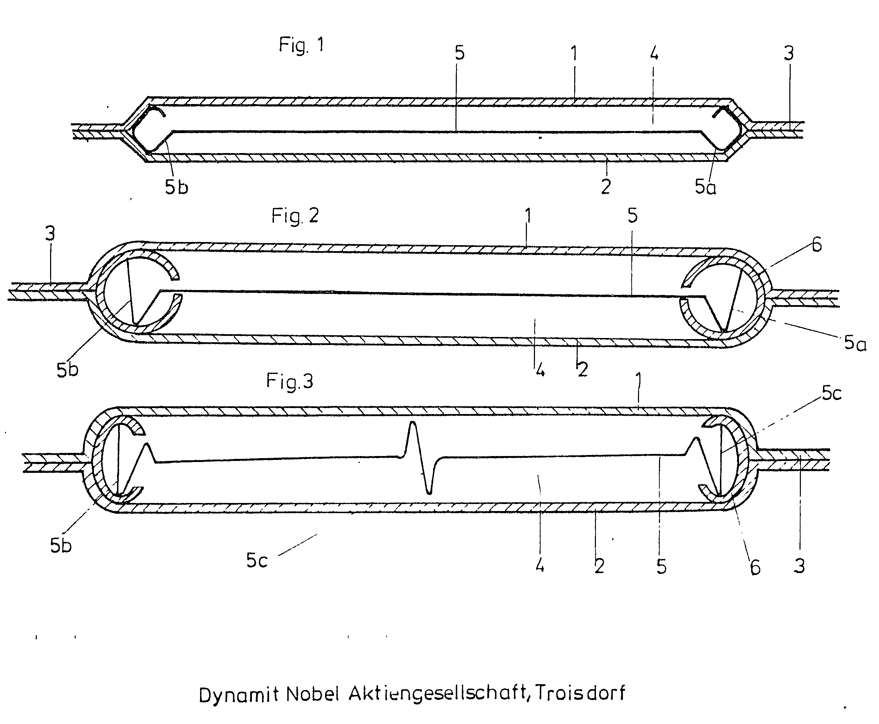

Fig. 1    einen schematischen Querschnitt durch einen Solarkollektor mit eingeschobenem Absorber,

Fig. 2
und 3    Varianten des Absorbers nach Figur 1,

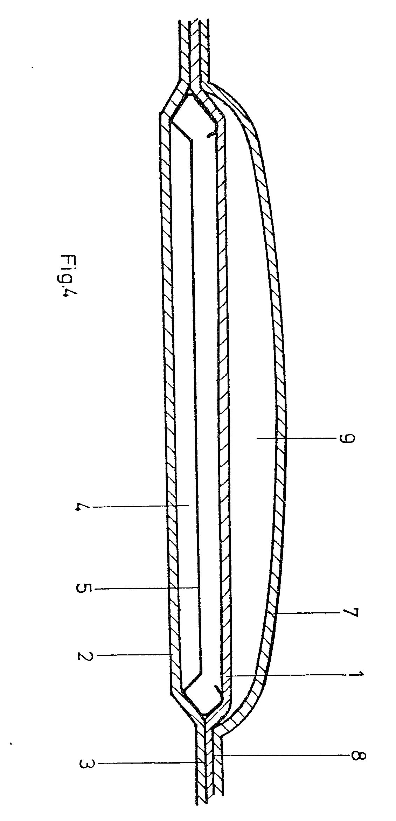

Fig. 4    einen ausschnittweisen schematischen Querschnitt durch einen mehrlagigen Solarkollektor.

Der ausschnittweise in Fig. 1 dargestellte Solarkollektor besteht aus den Kunststoffolien 1, 2 , beispielsweise Weich-PVC oder aus EPDM, die längs parallellaufender Verbindungsstellen bzw. Ränder 3 dicht und fest z.B. miteinander verklebt sind und zwischen sich den Kanal 4 für die zu erwärmende durchströmende Luft bilden. Der Querschnitt des Kanals 4 ist schematisch dargestellt, in Wirklichkeit werden sich die Folien 1, 2 bogenförmig aufwölben. Zur Querschnittsfestlegung des Kanals 4 und Erhöhung des Wirkungsgrades des Solarkollektors ist ein Absorber, hier in Gestalt des Absorberbleches 5 in den Kanal 4 eingebaut. Mit den abgebogenen Enden 5a, b wird das Absorberblech 5 in den Kanal 4 fixiert. Es ist auch möglich, den Absorber 5 an den Enden 5a, b z.B. innerhalb von Profilleisten 6, z.B. aus Kunststoff, wie in Fig. 2 dargestellt, zu führen. Der Absorber 5 kann beispielsweise durch zusätzliche Abwinkelung 5c, wie in Fig. 3 dargestellt, eine Abstandhaltung im mittleren Bereich des Kanals 4 bewirken. Die in den gezeigten Beispielen dargestellten Ausbildungen des Absorbers 5 sind nur beispielsweise Ausführungen. Der Solarkollektor kann je nach Ausbildung und Anwendung auch eine größere Anzahl parallel nebeneinander verlaufender Kanäle 4 aufweisen.

In der Fig. 4 ist schematisch im Ausschnitt der Aufbau eines mehrlagigen Solarkollektors aus Kunststoffolien 1,2,7 gezeigt. Hier ist ein dreilagiger Solarkollektor dargestellt mit zwei Innenräumen, wobei der eine den luftdurchströmten Kanal 4 und der andere die isolierende Luftkammer 9 bilden. An den Rändern sind die Kunststoffolien dicht miteinander verbunden, siehe Verbindungsstellen 3,8. Mehrere Kanäle 4 mit isolierenden Luftkammern 9 können nebeneinander aufeinanderfolgen.

Bei einem vierlagigen Solarkollektor ist der Kanal 4 auch auf der anderen Seite noch mit einer weiteren Luftkammer isoliert, die von einer vierten Kunststoffolienlage gebildet wird. Zur Herstellung von Druckausgleich können die innenliegenden Kunststoffolien bzw. der Absorber mittels Öffnungen, Durchbrechungen o.ä. versehen sein. In den dargestellten Beispielen der Fig. 1 bis 4 sind jeweils die Kunststoffolien 1 und 7 transparent, die Kunststoffolie 2 als Absorber schwarz ausgeführt.

Patentansprüche:

1. Solarkollektor zur Erwärmung von Luft für einen solaren Wassererhitzer, bei dem die in dem Solarkollektor erwärmte Luft im Kreislauf durch einen Luft/Wasser-Wärmetauscher und zurück in den Solarkollektor geblasen wird, d a d u r c h  g e k e n n z e i c h n e t , daß der Solarkollektor aus mindestens zwei übereinanderliegenden Kunststoffolien besteht, die mindestens längs zweier Ränder miteinander verschweißt oder dicht verklebt sind und mindestens einen luftdurchströmten Kanal bilden, wobei mindestens die äußerste, der Sonneneinstrahlung direkt ausgesetzte Kunststoffolie transparent ausgebildet ist.

2. Solarkollektor nach Anspruch 1, dadurch gekennzeichnet, daß drei oder vier übereinanderliegende Kunststoffolien vorgesehen sind, die mindestens längs zweier Ränder miteinander dicht verbunden sind und mindestens einmal zwei bzw. drei übereinanderliegende Kanäle bilden.

3. Solarkollektor nach Anspruch 2, dadurch gekennzeichnet, daß der luftdurchströmte Kanal ein- bzw. beidseitig thermisch isoliert ist, indem die zur Außenluft angrenzenden Kanäle als geschlossene Luftkammer ausgebildet sind.

4. Solarkollektor nach einem der Ansprüche 2 oder 3, dadurch gekennzeichnet, daß bei dreilagigen Solarkollektoren die mittlere Kunststoffolie, bei vierlagigen beide innenliegenden Kunststoffolien eine oder mehrere kleine Öffnungen aufweisen, die eine Verbindung zwischen den Luftkammern und den luftdurchströmten Kanälen herstellen.

5. Solarkollektor nach einem der Ansprüche 1 bis 4, dadurch gekennzeichnet, daß die Aufwölbung des Solarkollektors infolge des inneren Staudruckes der erwärmten Luft mechanisch begrenzt ist.

6. Solarkollektor nach einem der Ansprüche 1 bis 5, dadurch gekennzeichnet, daß der Querschnitt des von der solar zu erwärmenden Luft durchströmten, beiderseits von Kunststoffolien begrenzten Kanales durch Einschieben starrer Teile fixiert ist.

7. Solarkollektor nach einem der Ansprüche 1 bis 6, dadurch gekennzeichnet, daß der Querschnitt des luftdurchströmten Kanales in seinem Verhältnis mittlerer Höhe zu mittlerer Breite kleiner/gleich 0,15 bemessen ist.

8. Solarkollektor nach einem der Ansprüche 1 bis 7, dadurch gekennzeichnet, daß in dem luftdurchströmten Kanal ein metallischer Absorber so eingebracht ist, daß die zu erwärmende Luft sowohl an seiner Ober- wie auch an seiner Unterseite vorbeiströmt.

9. Solarkollektor nach Anspruch 8, dadurch gekennzeichnet, daß die Oberfläche der Absorber durch geometrische Makro- und Mikrounebenheiten vergrößert ist.

10. Solarkollektor nach einem der Ansprüche 8 oder 9, dadurch gekennzeichnet, daß die Oberseite des metallischen Absorbers geschwärzt ist, während seine Unterseite metallisch blank ist.

11. Solarkollektor nach einem der Ansprüche 8 bis 10, dadurch gekennzeichnet, daß der metallische Absorber an den Längsseiten oder/und innerhalb seiner Fläche so gebogen ist, daß seine Breite durch elastisches Verformen um einige Millimeter verringert werden kann.

12. Solarkollektor nach einem der Ansprüche 8 bis 11, dadurch gekennzeichnet, daß der metallische Absorber längs beider Seiten innerhalb des luftführenden Raumes in Profilleisten geführt ist.

13. Solarkollektor nach einem der Ansprüche 8 bis 12, dadurch gekennzeichnet, daß in dem metallischen Absorber Öffnungen sind, durch die hindurch ein Druckausgleich zwischen den beidseitigen Luftströmungen möglich ist.

14. Solarkollektor nach einem der Ansprüche 8 bis 13, dadurch gekennzeichnet, daß zwischen der Kunststoffolie an einer Schmalseite eine verschließbare Öffnung zum Einschieben der metallischen Absorber vorgesehen ist.

0022940

1/2

Fig. 1

Fig. 2

Fig. 3

Dynamit Nobel Aktiengesellschaft, Troisdorf

Fig.4